# EUROPEAN PATENT SPECIFICATION

(11) **EP 3 302 759 B1**
(45) Date of publication and mention of the grant of the patent: **26.08.2020**
(21) Application number: 15893558.5
(22) Date of filing: 02.11.2015
(51) Int. Cl.: B01D 47/02

(54) **MULTI-LEVEL GAS SCRUBBER WITH MULTIPLE FLOODED SCRUBBER HEADS**
MEHRSTUFIGER GASWÄSCHER MIT MEHREREN GEFLUTETEN WÄSCHERKÖPFEN
ÉPURATEUR DE GAZ À NIVEAUX MULTIPLES DOTÉ DE MULTIPLES TÊTES D'ÉPURATEUR NOYÉES

(30) Priority: 02.06.2015 US 201562169856 P
(43) Date of publication of application: 11.04.2018
(73) Proprietor: Pacific Green Technologies Inc., San Jose CA 95129 (US)
(72) Inventor: McClelland, Kenneth James, British Columbia V7V 3H5 (CA)
(74) Representative: Spengler, Robert
(86) International application number: PCT/CA2015/000563
(87) International publication number: WO 2016/191846

(56) References cited:
- WO-A1-2015/030352
- DE-A1- 4 201 033
- GB-A- 794 389
- US-A- 2 926 754
- US-A- 3 233 881
- US-A- 3 395 510
- US-A- 4 002 722
- US-A1- 2010 139 488
- US-A1- 2012 097 031

## Description

### FIELD OF INVENTION

The invention relates to the removal of air pollution emissions and particularly relates to an apparatus for scrubbing multiple contaminants from gases.

### BACKGROUND OF INVENTION

Document US 2010/0139488 A1 discloses an apparatus and process for removing acidic gases from flue gases produced by, for example, utility and industrial facilities. The acidic gases are removed as the flue gas flows upward through a contact zone within a passage, where the flue gas is contacted with an ammonium sulfate-containing scrubbing solution to absorb the acidic gases from the flue gas. The scrubbing solution and absorbed acidic gases therein are then accumulated, and ammonia and an oxygen-containing gas are injected into the accumulated scrubbing solution to react the absorbed acidic gases and produce ammonium sulfate. An acid solution is flowed across the passage above the contact zone of the passage, and the scrubbed flue gas is flowed upward through the acid solution to remove unreacted ammonia from the scrubbed flue gas. The acid solution is then removed from the passage after the acid solution has been contacted by the scrubbed flue gas.

Document DE 42 01 033 A1 discloses an apparatus for aerosol separation from gases, and in particular for removal of KOH droplets from hydrogen or oxygen streams after water electrolysis. The apparatus comprises a bubble column space and a demister. A supply pipe, covered with a perforated plate, extends from below into a vessel partially filled with scrubbing liquid and terminates below the liquid surface level which is determined by an outlet located outside the bubble column space.

Document WO 2015/030352 A1 discloses an exhaust gas desulfurization apparatus for a ship, capable of increasing the desulfurization treatment capability and reducing the size of the apparatus. The exhaust gas desulfurization apparatus is for performing desulfurization treatment on exhaust gas by using sea water, and comprises: a body having a gas supply pipe for introducing the exhaust gas therein and a gas discharge pipe for discharging the exhaust gas; a swirling treatment unit for swirling the exhaust gas introduced into the body; a dissolution treatment unit for enabling the exhaust gas to pass through the sea water; a collection treatment unit having a filling material for collecting pollutants from the exhaust gas; a spray pipe for spraying and supplying the sea water to the swirling treatment unit, the dissolution treatment unit, and the collection treatment unit; and a discharge pipe for discharging the sea water to the swirling treatment unit, the dissolution treatment unit, and the collection treatment unit, and the sea water of the spray pipe is directly supplied from the sea water and the sea water of the discharge pipe is not reused.

Document US 2012/0097031 A1 discloses a scrubber for removing contaminants from a gas stream, comprising a tank, a submerged head extending horizontally, wherein the submerged head comprises a plate having slots extending throughout, four solid joined vertical walls inset from the walls of the tank below the plate to form an open ended box under the plate, and openings along each edge of the plate between the walls of the tank and the vertical walls of the submerged head; a first baffle above the submerged head and means for spraying scrubbing fluid.

The air pollution emissions resulting from the combustion of coal, municipal solid waste and biomass, and air emissions from chemical and industrial processes have been increasingly restricted by governmental environmental agencies as a result of greater public demand for environmental protection coupled with advancements in pollution abatement technologies which allow more restrictive standards to be implemented. The restrictions vary by nation, region and proximity of the air pollution source to population centers. The regulations target a wide range of combustion by-products including particulate matter; acid gases such as sulphur dioxide, hydrogen chloride and hydrogen fluoride and metals such as mercury and metal groups known for their detrimental effects on human health. Many of the pollution abatement systems in use today by utilities and industrial processes have a history of development dating from the establishment of the first environmental regulations. These devices employ known chemical and mechanical processes to remove the regulated pollution components from gas streams. The stringent emission limits in force today and those more stringent limits pending implementation require alternative approaches. These alternative approaches include adding refinements to existing technologies to enhance their pollutant removal efficiency.

The emissions resulting from the combustion of diesel fuels in marine and power generation applications are also sources of regulated emissions. General cargo and container ships that carry the goods of international trade are burning bunker grade fuels that contain in the range of 2.5% to 2.7% sulphur. In addition, these marine diesel engines produce large amounts of ash, soot and unburned fuel that are emitted to the atmosphere on the world's oceans. The sulphur and particulate emissions are greater than permitted by the environmental regulations for land based operations. Regulations for these emissions in territorial waters as well as dockside are being implemented by regional and national environmental agencies and in international waters by the International Marine Organization. The options available to meet the demands of these regulation include adding scrubbing technologies or changing the fuel supply for ships to low sulphur fuels.

Emission technologies for the combustion processes noted above generally can be divided into wet and dry systems. Dry systems utilize different technologies to address the removal of acid gases and particulate. Dry flue gas desulphurization is commonly accomplished by devices such as a spray dryer tower. Common among the dry particulate systems are bag filters and electrostatic precipitators.

Wet systems used in conjunction with combustion flue gases commonly use aqueous based slurry containing an alkaline material such as limestone, lime, hydrated lime or enhanced lime as a neutralizing agent. Wet scrubbing systems employ several methods to create an interaction between the aqueous slurry and the contaminated flue gas. A simple approach uses sprayers in a spray tower or similar device to distribute the slurry into the flue gas to remove sulphur dioxide, hydrogen chloride and hydrogen fluoride through reaction with the slurry to form calcium based compounds. The interaction between the flue gas and the sprayed slurry is general in nature and is not as efficient or effective as forced wet scrubbing systems.

Forced wet scrubbing systems employ design approaches which force the flue gas into alkaline reagents contained in an aqueous slurry. The design of these systems creates a turbulent reaction zone that increases reaction time, and ensures complete interaction between the flue gas and alkaline slurry which improves acid gas removal efficiency. In addition, the turbulent zone creates an environment for the transfer of particulate matter from the flue gas to the scrubbing solution. These turbulent zones are generated by scrubbing heads containing ports submerged in a body of scrubbing fluid. The flue gas passes through the ports at high velocity which creates a turbulent zone in the scrubbing solution that transfers the particulate and provides a reaction zone for chemical interactions.

Thus, this form of wet system has the capacity to remove multiple pollutants in a single pass. It is however, limited to operating with a single interaction in the scrubbing fluid reservoir, typically located at the base of the scrubber. Its approach does not allow stacking the scrubbing heads so as to attain multiple scrubbing zones as the gas rises through the scrubber.

### Pacific Green Technologies Inc.

The more restrictive emission limits being imposed on industry to control air pollutants from combustion, industrial and chemical processes require enhanced approaches in order to provide high efficiency and cost-effective abatement systems.

### SUMMARY OF INVENTION

There is provided a vertically-oriented scrubber apparatus for removing a plurality of distinct contaminants from a contaminated gas stream, having a scrubber vessel having a ceiling, a floor, a cylindrical wall connecting the ceiling to the floor, a plurality of vertically-spaced heads, a velum above each head, a gas inlet, an induced draft fan, and a gas outlet; a submerged lower head positioned horizontally across the lower end of the scrubber vessel, wherein the submerged lower head includes a horizontal plate having a plurality of narrow slots extending throughout; a first scrubbing fluid reservoir disposed within the bottom end of the scrubber vessel below the submerged lower head, and a first reaction zone volume to a desired level above the submerged scrubbing head, the first scrubbing fluid selected to remove a first group of contaminants from the contaminated gas stream; a first scrubbing fluid inlet extending into a first volume above the submerged head, first spraying means in fluid connection with the first scrubbing fluid inlet for spraying the first scrubbing fluid into the first scrubbing fluid reaction zone volume, and a first scrubbing fluid outlet in the floor; a first flooded head extending horizontally across the entire cross-section of the scrubber vessel at a position above the first scrubbing fluid inlet, wherein the first flooded head comprises a plate having a plurality of narrow slots extending throughout; a second scrubbing fluid reaction zone volume disposed to a desired level above the first flooded head, the second scrubbing fluid selected to remove a second group of contaminants from the contaminated gas stream; and a second scrubbing fluid inlet extending into a second velum above the first flooded head, second spraying means in fluid connection with the second scrubbing fluid inlet for spraying the second scrubbing fluid into the second scrubbing fluid reaction zone volume, and a second scrubbing fluid outlet above the first flooded head passing through the scrubber vessel wall.

The scrubber apparatus may have one or more additional flooded heads extending horizontally across the entire cross-section of the scrubber vessel and stacked vertically above the other heads, each defining an additional velum in relation to the head below; one or more additional scrubbing fluid reaction zone volumes, each disposed above a corresponding flooded head to a desired level, each additional scrubbing fluid selected to remove a desired additional group of contaminants from the contaminated gas stream; and one or more additional scrubbing fluid inlets extending through the wall into the corresponding additional velum above the corresponding additional flooded head, additional corresponding spraying means in fluid connection with the additional scrubbing fluid inlet for spraying the additional scrubbing fluid into the corresponding additional scrubbing fluid reaction zone volume, and one or more corresponding additional scrubbing fluid outlets above the corresponding flooded head passing through the wall of the scrubber vessel.

The apparatus may further comprise a mist eliminator consisting of an absorbent mesh extending across the scrubber vessel. Each of the spraying means may be one or more spray nozzles. The size of the slots in the flooded heads may be selected to prevent passage therethrough of scrubbing fluid in the presence of pressurized gas below the head.

There is further provided the use of such a scrubber apparatus remove multiple contaminants from a contaminated gas stream according to a method comprising the steps of introducing a first scrubbing fluid into the apparatus to a desired fluid level above the lowermost scrubber head; introducing a second scrubbing fluid into the apparatus to a desired level above the next highest scrubber head; cooling a contaminated process gas using a prior art gas conditioner; introducing the cooled contaminated gas under pressure from an induced draft fan into the apparatus at a position below the lowermost scrubber head; allowing the gas to pass upwardly through the lowermost scrubber head to transfer a first group of contaminants from the contaminated gas into the first scrubbing fluid in a first scrubbing fluid reaction zone volume above the lowermost scrubber head; allowing the gas to continue passing upwardly through the next highest scrubber head to transfer a second group of contaminants from the contaminated gas into the second scrubbing fluid in a second scrubbing fluid reaction zone volume above the next highest scrubber head; spraying the exiting gas to remove additional contaminants and slow the gas flow velocity; allowing the exiting gas to exit the scrubbing apparatus; separately removing first and second scrubbing fluids from the scrubber vessel to maintain a desired level of each scrubbing fluid; and cleaning drained scrubbing fluids for reuse in the scrubbing apparatus.

The invention provides a scrubber apparatus for removing multiple contaminants from a contaminated gas stream, comprising a scrubber vessel having a series of vertically-stacked scrubber heads, each scrubber head flooded with a different scrubbing fluid, each scrubbing fluid selected to remove a desired group of contaminants from the contaminated gas stream, wherein the contaminated gas flows under pressure from below the lowermost scrubber head upwardly through the series of flooded scrubber heads.

The apparatus may be used to remove from a contaminated gas stream multiple contaminants selected from the group of contaminants comprising particulate matter, metals, hydrogen chloride, hydrogen fluoride, nitrous oxide, nitric oxide, carbon dioxide, and sulfur dioxide.

The present invention employs a proprietary flooded horizontal scrubbing head that occupies the entire scrubber cross section. The polluted gas passes from below to above the head through an array of ports cut into the head. Scrubbing fluid is supported above the head by the gas as the gas passes through ports at high velocity to create a turbulent reaction zone within the supported scrubbing fluid. The level of scrubbing fluid is controlled by overflow pipes or troughs and fluid is constantly added by distribution nozzles located above the turbulent zone. Further flooded horizontal heads can be added above the initial head at vertical intervals in the scrubber's cross-section. Using the flooded head approach, the present invention allows complete wet scrubbing at multiple levels, each level capable of operating with different neutralizing reagents. The capacity for multiple scrubbing zones provides the opportunity to improve overall removal efficiencies by adding polishing reaction zones for particulate and acid gas removal or by broadening the range of pollutants being removed by operating with a different neutralizing solution, or a combination of these operating conditions.

The present invention takes a novel approach to the creation of a turbulent scrubbing reaction zone at each of multiple levels with the capacity to use different neutralizing reagents at each level. Whereas traditional approaches use pressure differential across a scrubbing head to force gas through an array of ports submerged in a body of fluid, the present invention uses pressure differential to support the scrubbing fluid on top of a horizontal scrubbing head. The horizontal scrubbing head contains an array of ports through which the gas passes vertically upward into the flooded zone. The pressure differential and port design accelerates the gas sufficiently to create the desired highly turbulent reaction in the flooded zone above the head. The horizontal orientation of the scrubbing head allows multiple heads to be stacked within the same scrubber body. The flooded scrubber heads occupy the entire cross section of the scrubber body which devotes 100% of the scrubber's cross sectional area to scrubbing and the transit of gas. The horizontal orientation allows the scrubbing head to be any shape required by the space available for the scrubbing equipment. Because it has the capacity to remove multiple pollutants in a single pass the system has a smaller footprint than the accumulation of equipment that it replaces and as a single unit it is more cost-effective than multiple single purpose units. The flooded head can be incorporated into new scrubber designs or retrofitted into existing wet scrubbers using a submerged head design approach at its lowest level.

The flooded scrubbing head system is based upon a vertical orientation of the scrubber body and the horizontal orientation of the flooded scrubbing heads. The gas enters a plenum area above the scrubbing fluid reservoir in the base of the scrubber body and below the first flooded head. The gas is moved to the plenum by an induced draft fan capable of providing the volume required for the flue gas emission and pressure differential required to support the multiple reaction zones above the scrubbing head levels in the design. The pressure in the plenum is sufficient to force the gas through ports in the head and into a turbulent reaction zone above the head. The size, shape and plurality of the ports in the head are such that the gas is sufficiently accelerated to create the desired depth and vigor of turbulence above the head.

The fluid on each head is continuously circulated. The scrubbing fluid is pumped from a fluid reservoir to a network of fluid distribution nozzles that deliver scrubbing fluid to the area above each head. Return to the reservoir is provided by fluid level controls such as overflow troughs or standpipes that pipe the fluid back to the reservoir. The condition of the returning fluid is monitored for control factors such as pH and the reservoir is conditioned with additional neutralizing reagents to return the fluid to its optimum reaction condition before redistribution above the head. In addition, the fluid may be processed by solids removal devices such as hydrocyclones to remove particulate matter collected by the scrubbing fluid.

As the gas continues to rise in the flooded head scrubber it encounters additional flooded scrubbing heads with the same configuration of ports, fluid distribution and overflows to fluid reservoirs, Upon exiting the turbulent zone of the final head the gas rises through demisters or similar devices to remove free water from the gas. The gas is available to be ducted to the stack or further processes if required.

The flooded head system can also be used in conjunction with submerged scrubbing heads at the base level of the scrubber. After exiting the turbulent zone above the submerged scrubbing head the gas rises under pressure to a flooded head(s) that operate in the full cross section of the scrubber in the same manner as described above.

### BRIEF DESCRIPTION OF DRAWINGS

A detailed description of the preferred embodiment is provided below by way of example only and with reference to the following drawings in which:
Figure 1A is a top view of a schematic drawing of one embodiment of the flooded scrubber head of the present invention;
Figure 1B is a lateral cross-sectional view through 1B-1B of the flooded scrubber head depicted in Fig. 1A;
Figure 1C is a blow-up schematic view of one corner of the embodiment of a flooded scrubber head shown in Fig. 1A;
Figure 2 is a cross-sectional view of a multiple level scrubber having the flooded scrubber head of the present invention at each scrubbing level; and
Figure 3 is a schematic of an embodiment of a system where initial scrubbing is performed by a submerged scrubbing head and the flooded scrubber head of the present invention is used for scrubbing on subsequent levels above the initial head.

### DETAILED DESCRIPTION OF THE INVENTION

The present invention provides a means of creating multiple wet scrubbing interaction levels 2, 4 within a single scrubber vessel 11, each level of which is capable of scrubbing 100% of the gas flow with a different scrubbing fluid. The present invention uses a scrubber head design whose horizontal orientation and flooded operating characteristics allow the stacking of multiple heads within a single wet scrubber body. The ability to incorporate additional scrubbing interaction zones in a single system provides the opportunity to increase overall removal efficiency for pollutants such as particulate matter, acid gases or metals by adding polishing steps or to remove additional regulated pollutants by utilizing other neutralizing reagents. By incorporating the flooded scrubber heads of the present invention in wet scrubber designs the resulting system will have lower capital costs, a smaller footprint and higher efficiency removal of multiple pollutants.

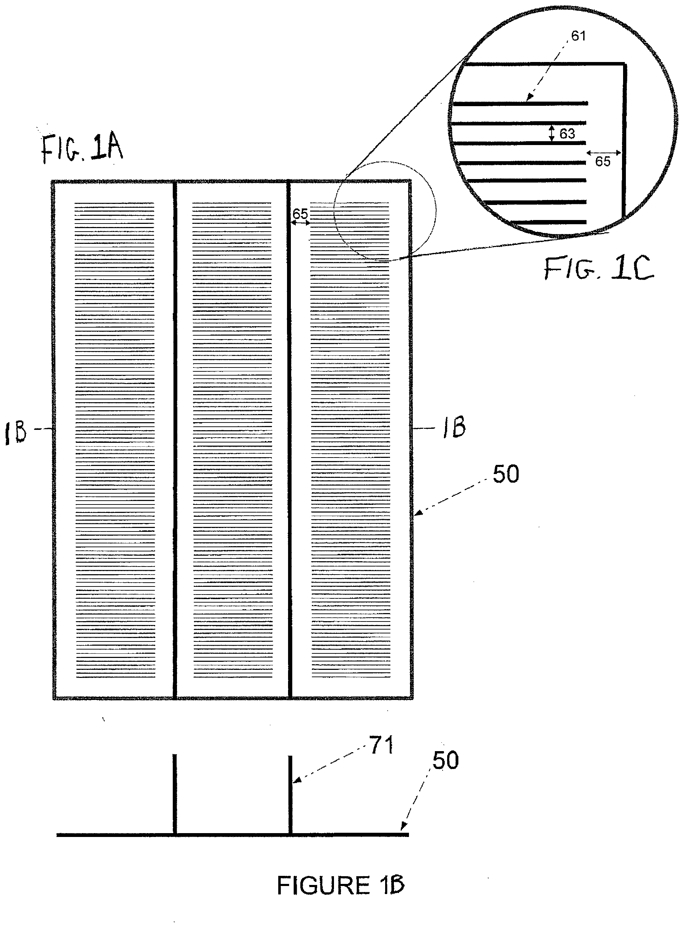

Referring to Figures 1A to 1C, the scrubbing head 50 is shown as a generic form to demonstrate the elements of the head. The head 50 operates in a horizontal orientation. The head may be manufactured from any sheet or plate material with sufficient strength, stiffness, and thermal and chemical resistance properties. Typical materials are metal plate with the preferred materials being stainless steel. The horizontal cross-sectional shape of the head conforms to the shape of the scrubber body so as to allow a sealed fit between the periphery of the scrubber head and the inner circumference of the scrubber vessel. The head contains a plurality of ports 61 that may be in any shape, number and orientation to the head. The preferred port shape is a slot with length in the range of 125 to 200mm with a preferred width of 2mm. The spacing 63 of the ports is typically in the range of 20 to 25mm. The margins 65 between the ports and the edge of the head are uniform with a preferred distance of 40mm. The head may contain accelerator plates 71 oriented at right angles to the head. The accelerator plates equally divide the space between the rows of ports 61. The margin 65 between the accelerator plates and the ports 61 is maintained at a preferred distance of 40mm. The accelerator plates are typically 150mm in height and contain scuppers at the head deck level to allow the lateral transfer of scrubbing fluid. The accelerator plate is of the same material as the scrubber head. Other parameters for the ports, margins, and accelerator plates are permitted within the scope of the invention.

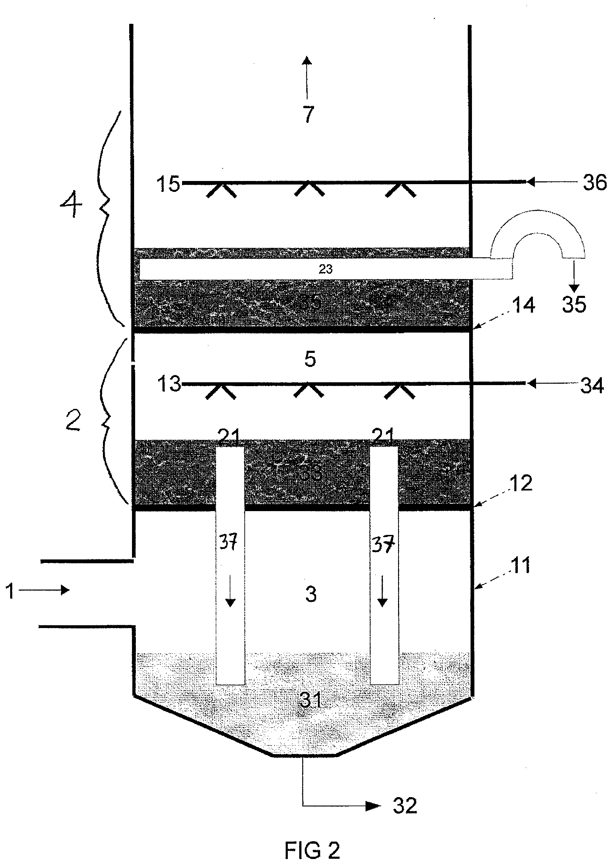

Referring to Figure 2, there is depicted an example of a scrubber system incorporating the flooded scrubber heads of the present invention which is comprised of a scrubbing vessel (11) containing two flooded heads 12, 14.

The process of gas contamination removal using the system of Figure 2 begins with introduction of the contaminated gas 1 from a combustion or industrial process that generates particulate matter, acid gases and metals that require removal. The gas enters a lowermost plenum 3 bounded by a reservoir of a first scrubbing fluid 31 (or a solid membrane) below and a flooded head 12 above. The gas enters under positive pressure created by an induced draft fan (not shown). The gas pressure is sufficient to support a desired depth of a first scrubbing fluid on the heads 12, 14 and to overcome the pressure drop incurred by the gas as it passes through the ports in the heads. Preferred pressure at the lowermost plenum 3 is 450mm of water. The gas rises through the ports in the lowermost head 12 at a velocity in the range of 20 to 25 meters per second. The gas enters a turbulent first scrubbing fluid reaction zone volume 33 where the gas and first scrubbing fluid are aggressively mixed. The first scrubbing fluid is selected for it reactivity with a first group of contaminants targeted for removal. The first scrubbing fluid level on the lowermost head 12 is controlled by overflow tubes that pass through the head to the first scrubbing fluid reservoir 31 that is typically located in the base of the scrubber vessel 11. The overflow first scrubbing fluid 37 is replaced by conditioned first scrubbing fluid 34 from a first scrubbing fluid inlet distribution header 13 in order to maintain fluid level and reactivity with the contaminants being removed. In addition to chemical reactivity, the aggressive turbulence created in the wet scrubber will efficiently remove particulate matter from the gas and transfer it to the scrubbing fluid. After exiting the turbulent first scrubbing fluid reaction zone volume the gas rises under the remaining pressure to repeat the process, passing through a second flooded head 14 into a turbulent second scrubbing fluid reaction zone volume 35. For illustrative purposes the depth of the second scrubbing fluid reaction zone volume 35 is controlled by a second scrubbing fluid outlet, which may be a plurality of overflow troughs 23 that transfer the second scrubbing fluid from the scrubber vessel and route it to a second scrubbing fluid reservoir not shown. Using this approach, the second scrubbing fluid on head 14 can be a different scrubbing fluid than that on head 12, thus allowing polishing or alternative contaminants to be removed. Second scrubbing fluid on head 14 is constantly replaced with conditioned scrubbing fluid 36. The decontaminated gas 7 exiting the second scrubbing fluid reaction zone volume 35 can be ducted to the stack or further processes. Using this same approach, additional flooded scrubbing heads may be serially added vertically within the scrubber body for further polishing or removal of other air pollutants as required by the process.

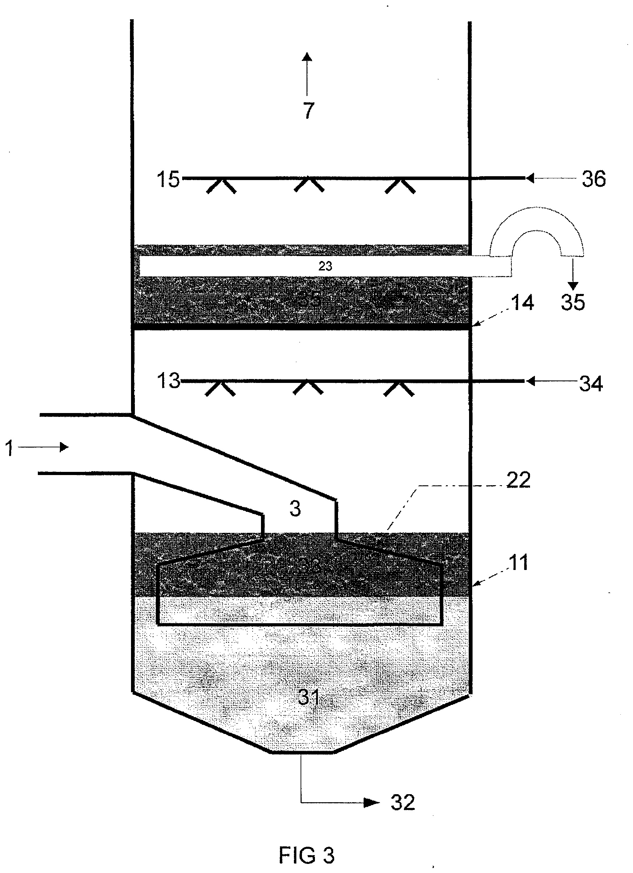

Referring to Figure 3, there is shown an example of a system comprising a scrubbing vessel 11 containing a submerged lowermost head 22 beneath a flooded head 14 functioning as a second scrubbing head.

The process in Figure 3 begins with the contaminated gas 1 from a combustion or industrial process that generates particulate matter, acid gases and metals that require removal. The gas is ducted to the submerged scrubber head 22. The gas enters under positive pressure created by an induced draft fan (not shown). The gas pressure is sufficient to overcome the pressure created by the depth of a first scrubbing fluid on the lowermost head 22 and support the depth of a second scrubbing fluid to be supported on the second flooded head 14. Additional gas pressure is incorporated into the design to overcome the pressure drop incurred by the gas as it passes through the ports in the heads and losses incurred in the ducting of the gas. Preferred pressure at the lowermost plenum 3 is 450mm of water. The gas rises through the ports in the submerged head 22 at a velocity determined by the design of the head. The gas enters a turbulent first scrubbing fluid reaction zone volume 33 where the gas and first scrubbing fluid are aggressively mixed in a turbulent first scrubbing fluid reaction zone volume. The first scrubbing fluid is selected for its reactivity with a first group of contaminants targeted for removal. The first scrubbing fluid level on the submerged head 22 is controlled by sensors such as differential pressure sensors which activate control valves to regulate the flow of fluid exiting for recirculation via a first scrubbing fluid outlet 32 in the floor of the vessel. Conditioned first scrubbing fluid 34 is added through a first scrubbing fluid inlet distribution header 13 in order to maintain reactivity with the contaminants being removed. In addition to chemical reactivity, the aggressive turbulence created in the wet scrubber will efficiently remove particulate matter from the gas and transfer it to the scrubbing fluid. After exiting the turbulent first scrubbing fluid reaction zone volume 33 the gas rises under the remaining pressure to repeat the process, passing through flooded head 14 into a turbulent second scrubbing fluid reaction zone volume 35. For illustrative purposes the depth of the second scrubbing fluid reaction zone volume 35 is controlled by a second scrubbing fluid outlet, which may be a plurality of overflow troughs 23 that transfer the second scrubbing fluid from the scrubber vessel and route it to a second scrubbing fluid reservoir (not shown). Using this approach, the upper flooded head 14 can operate with a different scrubbing fluid than is used on the submerged head 22 thus allowing polishing or the addition of alternative reagents to remove other regulated contaminants. Second scrubbing fluid on the flooded head 14 is constantly replaced with conditioned second scrubbing fluid 36 carried by second scrubbing fluid inlet distribution header 15. The decontaminated gas 7 exiting the second scrubbing fluid reaction zone volume can be ducted to the stack or further processes. Using this same approach, additional flooded scrubbing heads may be serially added vertically within the scrubber vessel for further polishing or removal of other air pollutants as required by the process.

One or more flooded scrubbing heads as embodied in the present invention offer advantages over the current art represented by submerged scrubbing heads. Among the advantages is the ability to supply wet scrubbing of 100% of the gas at multiple levels of interaction zones with different neutralizing reagents within a single scrubbing body. This attribute allows a single scrubbing device to remove a broader range of pollutants at higher removal efficiencies. Scrubbers utilizing the flooded head design will have a smaller and highly flexible footprint, lower capital cost, scalability and capacity to remove multiple pollutants in a single device. The flooded head has application in combustion processes including coal, biomass and municipal solid waste where the primary pollutants targeted for removal are particulate matter, acid gases including sulphur dioxide, hydrogen chloride and hydrogen fluoride, metals including mercury. In addition, scrubbers used in chemical and industrial processes requiring the removal of dust, odors and acid gases are candidates for flooded head designs in both new and retrofit installations.

From the foregoing, it will be seen that this invention is one well adapted to attain all of the ends and objectives herein set forth, together with other advantages which are obvious and which are inherent to the system. It will be understood that certain features and sub-combinations are of utility and may be employed with reference to other features and sub-combinations. This is contemplated by and is within the scope of the claims. Many possible embodiments may be made of the invention without departing from the scope of the claims. It is to be understood that all matter herein set forth and shown in the accompanying drawings is to be interpreted as illustrative and not in a limiting sense. It will be appreciated by those skilled in the art that other variations of the preferred embodiment may also be practiced without departing from the scope of the invention as set forth in the claims.

## Claims

1. A vertically-oriented scrubber apparatus for removing a plurality of distinct contaminants from a contaminated gas stream, comprising:
a) a scrubber vessel having a ceiling, a floor, a cylindrical wall connecting the ceiling to the floor, a plurality of vertically-spaced heads, a volume above each head, a gas inlet, an induced draft fan, and a gas outlet;
b) a submerged lower head positioned horizontally across the lower end of the scrubber vessel, wherein the submerged lower head includes a horizontal plate having a plurality of narrow slots extending throughout;
c) a first scrubbing fluid reservoir disposed within the bottom end of the scrubber vessel below the submerged lower head, and a first reaction zone volume to a desired level above the submerged scrubbing head, the first scrubbing fluid selected to remove a first group of contaminants from the contaminated gas stream;
d) a first scrubbing fluid inlet extending into a first volume above the submerged head, first spraying means in fluid connection with the first scrubbing fluid inlet for spraying the first scrubbing fluid into the first scrubbing fluid reaction zone volume, and a first scrubbing fluid outlet in the floor;
e) a first flooded head extending horizontally across the entire cross-section of the scrubber vessel at a position above the first scrubbing fluid inlet, wherein the first flooded head comprises a plate having a plurality of narrow slots extending throughout;
f) a second scrubbing fluid reaction zone volume disposed to a desired level above the first flooded head, the second scrubbing fluid selected to remove a second group of contaminants from the contaminated gas stream; and
g) a second scrubbing fluid inlet extending into a second volume above the first flooded head, second spraying means in fluid connection with the second scrubbing fluid inlet for spraying the second scrubbing fluid into the second scrubbing fluid reaction zone volume, and a second scrubbing fluid outlet above the first flooded head passing through the scrubber vessel wall.

2. The scrubber apparatus of claim 1, further comprising:
a) one or more additional flooded heads extending horizontally across the entire cross-section of the scrubber vessel and serially stacked vertically above the other heads, each defining an additional volume in relation to the head below;
b) one or more additional scrubbing fluid reaction zone volumes, each disposed above a corresponding flooded head to a desired level, each additional scrubbing fluid selected to remove a desired additional group of contaminants from the contaminated gas stream; and
c) one or more additional scrubbing fluid inlets extending through the wall into the corresponding additional volume above the corresponding additional flooded head, additional corresponding spraying means in fluid connection with the additional scrubbing fluid inlet for spraying the additional scrubbing fluid into the corresponding additional scrubbing fluid reaction zone volume, and one or more corresponding additional scrubbing fluid outlets above the corresponding flooded head passing through the wall of the scrubber vessel.

3. A method of removing multiple contaminants from a contaminated gas stream, the method comprising the steps of:
a) introducing a first scrubbing fluid into the apparatus of claim 1 to a desired fluid level above the submerged scrubber head;
b) introducing a second scrubbing fluid into the apparatus of claim 1 to a desired level above the flooded scrubber head;
c) cooling a contaminated process gas using a prior art gas conditioner;
d) introducing the cooled contaminated gas under pressure from an induced draft fan into the apparatus of claim 1 at a position below the submerged scrubber head;
e) allowing the gas to pass upwardly through the submerged scrubber head to transfer a first group of contaminants from the contaminated gas into the first scrubbing fluid in a first scrubbing fluid reaction zone volume above the submerged scrubber head;
f) allowing the gas to continue passing upwardly through the flooded head to transfer a second group of contaminants from the contaminated gas into the second scrubbing fluid in a second scrubbing fluid reaction zone volume above the flooded head;
g) spraying the exiting gas to remove additional contaminants and slow the gas flow velocity;
h) allowing the exiting gas to exit the scrubbing apparatus;
i) separately removing first and second scrubbing fluids from the scrubber vessel to maintain a desired level of each scrubbing fluid; and
j) cleaning drained scrubbing fluids for reuse in the scrubbing apparatus.

4. The method of claim 3, further comprising the additional step (ff) after step (f) of:
ff) allowing the gas to continue passing upwardly through one or more serially vertically stacked additional flooded heads to transfer one or more additional groups of contaminants from the contaminated gas into one or more additional scrubbing fluids in each of one or more additional scrubbing fluid reaction zone volumes above each of the corresponding flooded heads.

## Patentansprüche

1. Vertikal ausgerichtetes Wäschergerät zur Entfernung einer Vielzahl von verschiedenen Verunreinigungen aus einem verunreinigten Gasstrom, umfassend:
a) ein Wäschergefäß mit einer Decke, einem Boden, einer zylindrischen Wand, die die Decke mit dem Boden verbindet, einer Vielzahl von vertikal beabstandeten Köpfen, einem Volumen über jedem Kopf, einen Gaseinlass, ein Saugzuggebläse und einen Gasauslass;
b) einen eingetauchten unteren Kopf, der horizontal über dem unteren Ende des Wäschergefäßes positioniert ist, wobei der eingetauchte untere Kopf eine horizontale Platte mit einer Vielzahl von engen Schlitzen, die sich durchgehend erstrecken, aufweist;
c) einen ersten Wäscherfluid-Behälter, der innerhalb des unteren Endes des Wäschergefäßes unter dem eingetauchten unteren Kopf angeordnet ist, und ein erstes Reaktionsbereichsvolumen bis zu einem gewünschten Niveau über dem eingetauchten Wäscherkopf, wobei das erste Wäscherfluid ausgewählt ist, um eine erste Gruppe von Verunreinigungen aus dem verunreinigten Gasstrom zu entfernen;
d) einen ersten Wäscherfluideinlass, der sich in ein erstes Volumen über dem eingetauchten Kopf erstreckt, erste Sprühmittel in fluidischer Verbindung mit dem ersten Wäscherfluideinlass zum Sprühen des ersten Wäscherfluids in das erste Wäscherfluid-Reaktionsbereichsvolumen, und einen ersten Wäscherfluidauslass im Boden;
e) einen ersten Wäscherkopf, der sich horizontal über den gesamten Querschnitt des Wäschergefäßes erstreckt, an einer Position über dem ersten Wäscherfluideinlass, wobei der erste geflutete Kopf eine Platte mit einer Vielzahl von engen Schlitzen, die sich durchgehend erstrecken, umfasst;
f) ein zweites Wäscherfluid-Reaktionsbereichsvolumen, das bis zu einem gewünschten Niveau über dem ersten gefluteten Kopf angeordnet ist, wobei das zweite Wäscherfluid ausgewählt ist, um eine zweite Gruppe von Verunreinigungen aus dem verunreinigten Gasstrom zu entfernen; und
g) einen zweiten Wäscherfluideinlass, der sich in ein zweites Volumen über dem ersten gefluteten Kopf erstreckt, zweite Sprühmittel in fluidischer Verbindung mit dem zweiten Wäscherfluideinlass zum Sprühen des zweiten Wäscherfluids in das zweite Wäscherfluid-Reaktionsbereichsvolumen und einen zweiten Wäscherfluidauslass über dem zweiten gefluteten Kopf, der durch die Wäschergefäßwand verläuft.

2. Wäschergerät nach Anspruch 1, weiter umfassend:
a) einen oder mehrere zusätzliche geflutete Köpfe, die sich horizontal über den gesamten Querschnitt des Wäschergefäßes erstrecken und seriell vertikal über den anderen Köpfen gestapelt sind, wobei jeder ein zusätzliches Volumen mit Bezug auf den Kopf darunter definiert;
b) ein oder mehrere zusätzliche Wäscherfluid-Reaktionsbereichsvolumen, die jeweils über einem entsprechenden gefluteten Kopf bis zu einem gewünschten Niveau angeordnet sind, wobei jedes zusätzliche Wäscherfluid ausgewählt ist, um eine gewünschte zusätzliche Gruppe von Verunreinigungen aus dem verunreinigten Gasstrom zu entfernen; und
c) ein oder mehrere zusätzliche Wäscherfluideinlässe, die sich durch die Wand in das entsprechende zusätzliche Volumen über dem entsprechenden zusätzlichen gefluteten Kopf erstrecken, zusätzliche entsprechende Sprühmittel in fluidischer Verbindung mit dem zusätzlichen Wäscherfluideinlass zum Sprühen des zusätzlichen Wäscherfluids in das entsprechende zusätzliche Wäscherfluid-Reaktionsbereichsvolumen und einen oder mehrere entsprechende zusätzlichen Wäscherfluid-Auslässe über dem entsprechenden gefluteten Kopf, die durch die Wand des Wäschergefäßes verlaufen.

3. Verfahren zum Entfernen zahlreicher Verunreinigungen aus einem verunreinigten Gasstrom, wobei das Verfahren die folgenden Schritte umfasst:
a) Einführen eines ersten Wäscherfluids in das Gerät nach Anspruch 1 bis zu einem gewünschten Fluidniveau über dem eingetauchten Wäscherkopf;
b) Einführen eines zweiten Wäscherfluids in das Gerät nach Anspruch 1 bis zu einem gewünschten Niveau über dem eingetauchten Wäscherkopf;
c) Abkühlen eines verunreinigten Prozessgases unter Verwendung einer Gasaufbereitungseinheit nach dem Stand der Technik;
d) Einführen des abgekühlten verunreinigten Gases unter Druck von einem Saugzuggebläse in das Gerät nach Anspruch 1 an eine Position unter dem eingetauchten Wäscherkopf;
e) Ermöglichen, dass das Gas nach oben durch den eingetauchten Wäscherkopf strömt, um eine erste Gruppe von Verunreinigungen aus dem verunreinigten Gasstrom in das erste Wäscherfluid in ein erstes Wäscherfluid-Reaktionsbereichsvolumen über dem eingetauchten Wäscherkopf zu übertragen;
f) Ermöglichen, dass das Gas weiterhin nach oben durch den gefluteten Kopf strömt, um eine zweite Gruppe von Verunreinigungen aus dem verunreinigten Gas in das zweite Wäscherfluid in ein zweites Wäscherfluid-Reaktionsbereichsvolumen über dem zweiten gefluteten Kopf zu übertragen;
g) Sprühen des austretenden Gases, um zusätzliche Verunreinigungen zu entfernen und die Gasflussgeschwindigkeit zu verlangsamen;
h) Ermöglichen, dass das austretende Gas aus dem Wäschergerät austritt;
i) getrenntes Entfernen des ersten und zweiten Wäscherfluids aus dem Wäschergefäß, um ein gewünschtes Niveau jedes Wäscherfluids beizubehalten; und
j) Reinigen der abgelassenen Wäscherfluide, um das Wäschergerät wiederzuverwenden.

4. Verfahren nach Anspruch 3, weiter umfassend den zusätzlichen Schritte (ff) nach Schritt (f) des:
ff) Ermöglichens, dass das Gas weiterhin nach oben durch eines oder mehrere seriell vertikal gestapelte zusätzliche geflutete Köpfe strömt, um eine oder mehrere zusätzliche Gruppen von Verunreinigungen aus dem verunreinigten Gas in ein oder mehrere zusätzliche Wäscherfluide in jedem des einen oder der mehreren zusätzlichen Wäscherfluid-Reaktionsbereichsvolumina über jedem der entsprechenden zusätzlichen gefluteten Köpfe zu übertragen.

## Revendications

1. Appareil épurateur orienté verticalement pour retirer une pluralité de contaminants distincts d'un flux de gaz contaminé, comprenant :
a) une cuve d'épurateur ayant un plafond, un plancher, une paroi cylindrique raccordant le plafond au plancher, une pluralité de têtes verticalement espacées, un volume au-dessus de chaque tête, une entrée de gaz, un ventilateur à tirage induit et une sortie de gaz ;
b) une tête inférieure immergée positionnée horizontalement de part et d'autre de l'extrémité inférieure de la cuve d'épurateur, dans lequel la tête inférieure immergée comprend une plaque horizontale ayant une pluralité de fentes étroites s'étendant à travers cette dernière ;
c) un premier réservoir de fluide d'épuration disposé dans l'extrémité inférieure de la cuve d'épurateur au-dessous de la tête inférieure immergée et un premier volume de zone de réaction jusqu'à un niveau souhaité au-dessus de la tête d'épuration immergée, le premier fluide d'épuration étant sélectionné pour retirer un premier groupe de contaminants du flux de gaz contaminé ;
d) une première entrée de fluide d'épuration s'étendant dans un premier volume au-dessus de la tête immergée, un premier moyen de pulvérisation en raccordement de fluide avec la première entrée de fluide d'épuration pour pulvériser le premier fluide d'épuration dans le premier volume de zone de réaction de fluide d'épuration, et une première sortie de fluide d'épuration dans le plancher ;
e) une première tête noyée s'étendant horizontalement de part et d'autre de toute la section transversale de la cuve d'épurateur dans une position au-dessus de la première entrée de fluide d'épuration, dans lequel la première tête noyée comprend une plaque ayant une pluralité de fentes étroites s'étendant à travers cette dernière ;
f) un second volume de zone de réaction de fluide d'épuration disposé à un niveau souhaité au-dessus de la première tête noyée, le second fluide d'épuration étant sélectionné pour retirer un second groupe de contaminants du flux de gaz contaminé ; et
g) une seconde entrée de fluide d'épuration s'étendant dans un second volume au-dessus de la première tête noyée, un second moyen de pulvérisation en raccordement de fluide avec la seconde entrée de fluide d'épuration pour pulvériser le second fluide d'épuration dans le second volume de zone de réaction de fluide d'épuration et une seconde sortie de fluide d'épuration au-dessus de la première tête noyée passant à travers la paroi de cuve d'épurateur.

2. Appareil épurateur selon la revendication 1, comprenant en outre :
a) une ou plusieurs têtes noyées supplémentaires s'étendant horizontalement de part et d'autre de toute la section transversale de la cuve d'épurateur et empilées en série verticalement sur les autres têtes, chacune définissant un volume supplémentaire par rapport à la tête au-dessous ;
b) un ou plusieurs volumes de zone de réaction de fluide d'épuration supplémentaires, chacun disposé au-dessus d'une tête noyée correspondante à un niveau souhaité, chaque fluide d'épuration supplémentaire étant sélectionné pour retirer un groupe supplémentaire de contaminants du flux de gaz contaminé ; et
c) une ou plusieurs entrées de fluide d'épuration supplémentaires s'étendant à travers la paroi dans le volume supplémentaire correspondant au-dessus de la tête noyée supplémentaire correspondante, le moyen de pulvérisation correspondant supplémentaire étant en raccordement de fluide avec l'entrée de fluide d'épuration supplémentaire pour pulvériser le fluide d'épuration supplémentaire dans le volume de zone de réaction de fluide d'épuration supplémentaire correspondant, et une ou plusieurs sorties de fluide d'épuration supplémentaires correspondants au-dessus de la tête noyée correspondante passant à travers la paroi de la cuve d'épurateur.

3. Procédé pour retirer une pluralité de contaminants d'un flux de gaz contaminé, le procédé comprenant les étapes consistant à :
a) introduire un premier fluide d'épuration dans l'appareil selon la revendication 1 jusqu'à un niveau de fluide souhaité au-dessus de la tête d'épuration immergée ;
b) introduire un second fluide d'épuration dans l'appareil selon la revendication 1 jusqu'à un niveau souhaité au-dessus de la tête d'épuration noyée ;
c) refroidir un gaz de traitement contaminé en utilisant un conditionneur de gaz de l'art antérieur ;
d) introduire le gaz contaminé refroidi sous pression depuis un ventilateur à tirage induit dans l'appareil selon la revendication 1 dans une position au-dessous de la tête d'épuration immergée ;
e) permettre au gaz de remonter par la tête d'épuration immergée afin de transférer un premier groupe de contaminants du gaz contaminé dans le premier fluide d'épuration dans un premier volume de zone de réaction de fluide d'épuration au-dessus de la tête d'épuration immergée ;
f) permettre au gaz de continuer à remonter par la tête noyée afin de transférer un second groupe de contaminants du gaz contaminé dans le second fluide d'épuration dans un second volume de zone de réaction de fluide d'épuration au-dessus de la tête noyée ;
g) pulvériser le gaz existant pour retirer les contaminants supplémentaires et ralentir la vitesse d'écoulement de gaz ;
h) permettre au gaz existant de sortir de l'appareil d'épuration ;
i) retirer séparément les premier et second fluides de pulvérisation de la cuve d'épurateur afin de maintenir un niveau souhaité de chaque fluide d'épuration ; et
j) nettoyer les fluides d'épuration drainés pour les réutiliser dans l'appareil d'épuration.

4. Procédé selon la revendication 3, comprenant en outre l'étape supplémentaire (ff) après l'étape (f) consistant à :
ff) permettre au gaz de continuer à remonter à travers une ou plusieurs têtes noyées supplémentaires verticalement empilées en série afin de transférer un ou plusieurs groupes supplémentaires de contaminants du gaz contaminé dans un ou plusieurs fluides d'épuration supplémentaires dans chacun des un ou plusieurs volumes de zone de réaction de fluide d'épuration supplémentaires au-dessus de chacune des têtes noyées correspondantes.
